# EUROPEAN PATENT SPECIFICATION

(11) **EP 4 198 845 B1**
(45) Date of publication and mention of the grant of the patent: **09.12.2026**
(21) Application number: 22203066.0
(22) Date of filing: 21.10.2022
(51) Int. Cl.: G06Q 10/00, G06Q 10/04, G06Q 10/067

(54) **METHOD AND SYSTEM FOR ESTIMATING URBAN METABOLISM**
VERFAHREN UND SYSTEM ZUR SCHÄTZUNG DES STÄDTISCHEN STOFFWECHSELS
PROCÉDÉ ET SYSTÈME D'ESTIMATION DU MÉTABOLISME URBAIN

(30) Priority: 20.12.2021 IN 202121059475
(43) Date of publication of application: 21.06.2023
(73) Proprietor: Tata Consultancy Services Limited, Maharashtra (IN)
(72) Inventor: DESHPANDE, Shailesh Shankar, 411013 Pune, Maharashtra (IN); BANOLIA, Chaman, 110001 New Delhi (IN); PURUSHOTHAMAN, Balamuralidhar, 560066 Bangalore, Karnataka (IN)
(74) Representative: Goddar, Heinz J.

(56) References cited:
- WO-A1-2015/108974
- AU-B2- 2016 203 849

## Description

### CROSS-REFERENCE TO RELATED APPLICATIONS AND PRIORITY

The present application claims priority from Indian patent application number 202121059475, filed on December 20, 2021.

### TECHNICAL FIELD

The disclosure herein generally relates to the field of urban metabolism and more specifically, to a method and system for estimating urban metabolism based on remotely sensed data.

### BACKGROUND OF THE INVENTION

In today's era, most of the world population wants to live in urban areas. Urban areas are the centers of socio-economic activities for large population and hence they are generally economic prime-overs of the state. While they provide socio-economic means of wellbeing, they consume large number and quantities of resources as well. The main natural resources are water, soil (minerals, green produce and so on), and air. All of them provide certain ecoservices to the urban population and may be within the municipal boundary of the urban or outside the boundary, for example, drinking water for the urban area or population may come from nearby water supply lake.

The urban population uses these resources for its activities, and it also produces waste materials like water effluents, solid waste, air pollutants and so on. Such emissions by cities are becoming a global issue, in addition to the local issues because of the pollution. Carbon dioxide emissions are leading cause of global warming and climate change. The effects of particulate matter on precipitation are not very well understood yet-particulate matter increase and decrease precipitation depending upon the conditions. Local effects include air pollution, water pollution, land degradation, heat island effect, urban floods and so on. Because of these adverse effects, cities are becoming unsustainable day by day.

In order to model the material inflows and outflows from the urban areas, focus is on estimating/predicting emissions by the urban area and further to model its impact on the urban surroundings. Most of existing state of the art explains the concept of urban metabolism with respect to water demand and carbon dioxide emissions, most of the discussions are based on the reported data by the urban areas. It is important to estimate urban metabolism, which is a model to facilitate the description and analysis of the flows of the materials and energy within cities, such as undertaken in a material flow analysis of a city. It provides researchers with a metaphorical framework to study the interactions of natural and human systems in specific regions. WO2015/108974A1 describes, "An ecosystem vision-making application includes a web server that delivers data from a database for a geographic model together with JavaScript scripts that implement the model, both being delivered to a JavaScript-enabled web browser on a client. Using tools defined by the vision-making application, vision parameters are defined for a vision applicable to a geographic location. Execution of the JavaScript scripts by the web browser enables calculation of an environmental performance indicator which includes metrics for ecologically significant performance indicators for the vision applied to the geographic location. Other performance metrics may be calculated, such as social metrics, economic metrics and livability metrics. These metrics may also be calculated for baseline visions and for visions from other users, thereby enabling comparison with the user-defined vision, and so as to provide for evaluation, change, improvement, commentary, distribution and sharing of the vision" *(Abstract).* Further, AU2016/203849B2 describes, "A method and computer system for reporting on a target greenhouse gas within a geographical boundary of an offset project by compiling policy parameters for the target greenhouse gas and generating a science plan for monitoring the target greenhouse gas for the target geographical boundary of the offset project, based upon the compiled policy parameters. An allometric model for the target greenhouse gas within the geographical boundary of the offset project is generated based upon the science plan of the target greenhouse gas for the geographic boundary, and a report for the target greenhouse gas within the target geographical boundary of the offset project is generated based upon the allometric model" *(Abstract).*

### SUMMARY OF THE INVENTION

Embodiments of the disclosure present technological improvements as solutions to one or more of the above-mentioned technical problems recognized by the inventors in conventional systems. For example, in one embodiment, a method and system for estimating urban metabolism based on remotely sensed data is provided.

In one aspect, a processor-implemented method for estimating urban metabolism based on remotely sensed data is provided. The method includes one or more steps such as receiving, via an input/output interface, remotely sensed data, and a predefined ecological dataset of a predefined urban area, wherein the remotely sensed data includes multispectral data, hyperspectral data, radar data, one or more Landsat-8 images and shapefiles of the predefined urban area. Further, filtering, via a one or more hardware processors, the received predefined ecological dataset based on null values and an emission availability to structure the ecological dataset into a predefined format of a mapping table, processing, via the one or more hardware processors, the structured ecological dataset based on one or more predefined automatic scripts, analyzing, via the one or more hardware processors, the received remotely sensed data according to shapefiles of the predefined urban area using a machine learning technique and one or more fractions of classes in each pixel of the remotely sensed data, classifying, via the one or more hardware processors, the one or more Landsat-8 images and shapefiles based on a support vector machine to obtain a dataset of vegetation, impervious surfaces, and soil, training, via the one or more hardware processors, a regression model using the pivoted dataset and the identified land cover, and determining, via the one or more hardware processors, one or more urban metabolic parameters using the trained regression model.

In another aspect, a system for estimating urban metabolism based on remotely sensed data is provided. The system includes an input/output interface configured to receive remotely sensed data and a predefined ecological dataset of a predefined urban area, wherein the remotely sensed data includes multispectral data, hyperspectral data, radar data, one or more Landsat-8 images and shapefiles of the predefined urban area, one or more hardware processors and at least one memory storing a plurality of instructions, wherein the one or more hardware processors are configured to execute the plurality of instructions stored in the at least one memory.

Further, the system is configured to filter the received predefined ecological dataset based on null values and an emission availability to structure the ecological dataset into a predefined format of a mapping table, process the structured ecological dataset based on one or more predefined automatic scripts, wherein the one or more predefined automatic scripts for querying questions and answers of interest from a survey, pivoting the structured ecological dataset, analyze the received remotely sensed data according to shapefiles of the predefined urban area using a machine learning technique and one or more fractions of classes in each pixel of the remotely sensed data, classify the one or more Landsat-8 images based on a support vector machine to obtain a dataset of vegetation, impervious surfaces, and soil, wherein a fully constrained least square technique is used for linear spectral unmixing of the remote sensing dataset to calculate the fractions of vegetation, impervious surfaces, and soil (VIS) in each pixel of the image, training a regression model using the pivoted dataset and the identified land cover and determine one or more urban metabolic parameters using the trained regression model, wherein the one or more urban metabolic parameters of present and future as per the simple temporal or spatial scenario include carbon emission of the predefined region.

In yet another aspect, one or more non-transitory machine-readable information storage mediums are provided comprising one or more instructions, which when executed by one or more hardware processors causes a method for estimating urban metabolism based on remotely sensed data is provided. The method includes one or more steps such as receiving, via an input/output interface, remotely sensed data, and a predefined ecological dataset of a predefined urban area, wherein the remotely sensed data includes multispectral data, hyperspectral data, radar data, one or more Landsat-8 images and shapefiles of the predefined urban area. Further, filtering, via a one or more hardware processors, the received predefined ecological dataset based on null values and an emission availability to structure the ecological dataset into a predefined format of a mapping table, processing, via the one or more hardware processors, the structured ecological dataset based on one or more predefined automatic scripts, analyzing, via the one or more hardware processors, the received remotely sensed data according to shapefiles of the predefined urban area using a machine learning technique and one or more fractions of classes in each pixel of the remotely sensed data, classifying, via the one or more hardware processors, the one or more Landsat-8 images and shapefiles based on a support vector machine and unmixing analysis to obtain a dataset of vegetation, impervious surfaces, and soil, and its fractions, and training, via the one or more hardware processors, a regression model using the pivoted dataset and the identified land cover, and determining, via the one or more hardware processors, one or more urban metabolic parameters using the trained regression model.

It is to be understood that the foregoing general descriptions and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for estimating urban metabolism based on remotely sensed data, according to an embodiment of the present disclosure.
FIG. 2 is block diagram of the system to determine environment and socio-economic impact, according to an embodiment of the present disclosure.
FIG. 3 is a flow diagram to illustrate a method for estimating urban metabolism based on remotely sensed data, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

The embodiments herein provide a method and system for estimating urban metabolism based on remotely sensed data. It has been observed that cities disclosing ecological data through Carbon Disclosure Project (CDP) has several advantages, from improved engagement to centralizing data and tracking progress. CDP data is a collection of responses to the questionnaire by CDP, filled by urban/town administration or municipal corporations. The CDP evaluates your response, benchmarks the urban's performance against peers, and finds areas of opportunity for them. CDP houses the world's largest, most comprehensive dataset on environmental action. As the data grows to include thousands more companies and cities each year, there is increasing the potential to utilize the data in impactful ways. So, the CDP launched its data to the Kaggle community for a challenge.

Herein, the system is configured to develop a model for identifying correct features from image or proxy features from image and then develop/use relation between the image feature or proxy feature from the image with the urban metabolic parameter. For example, a run-off model using impervious surfaces extracted using an urban object detector, radiant heat using basic land covers such as vegetation impervious surface soil (VIS). Further, the system develops an urban growth model which predicts spatial extent of the given proxy features. For example, take impervious surfaces spatial distribution and develop/use the model for its prediction in future urban growth predictor. Further, the system is configured to use the urban metabolic parameter predictor for predicting the urban metabolic parameters which takes output of models in urban growth predictor as an input. Output of the urban growth predictor is subjected to different conditions. The urban growth scenario for each such conditions is different. By changing conditions of the model, different growth scenarios are played out. For each such scenario, at least one urban metabolic parameter is predicted by taking output of the urban growth predictor for each scenario as an input.

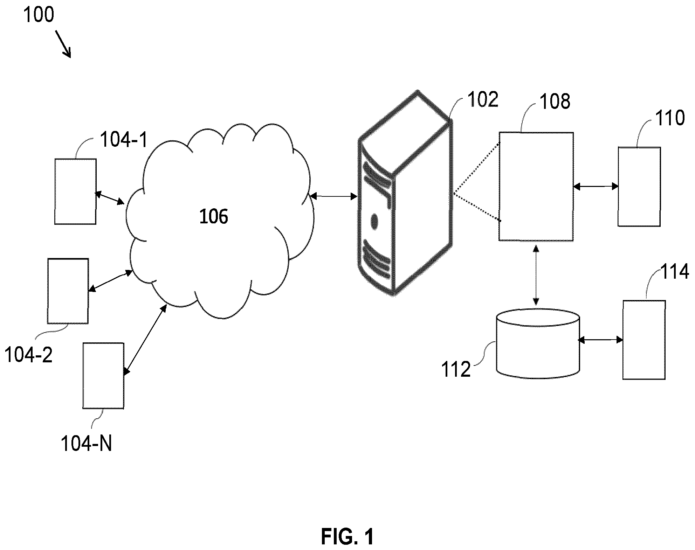

Referring now to the drawings, and more particularly to FIG. 1 through 3, where similar reference characters denote corresponding features consistently throughout the figures, there are shown preferred embodiments and these embodiments are described in the context of the following exemplary system and/or method.

FIG. 1 illustrates a block diagram of a system (100) for estimating urban metabolism based on remotely sensed data, in accordance with an example embodiment. Although the present disclosure is explained considering that the system (100) is implemented on a server, it may be understood that the system (100) may comprise one or more computing devices (102), such as a laptop computer, a desktop computer, a notebook, a workstation, a cloud-based computing environment and the like. It will be understood that the system (100) may be accessed through one or more input/output interfaces 104-1, 104-2... 104-N, collectively referred to as I/O interface (104). Examples of the I/O interface (104) may include, but are not limited to, a user interface, a portable computer, a personal digital assistant, a handheld device, a smartphone, a tablet computer, a workstation, and the like. The I/O interface (104) are communicatively coupled to the system (100) through a network (106).

In an embodiment, the network (106) may be a wireless or a wired network, or a combination thereof. In an example, the network (106) can be implemented as a computer network, as one of the different types of networks, such as virtual private network (VPN), intranet, local area network (LAN), wide area network (WAN), the internet, and such. The network (106) may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network (106) may include a variety of network devices, including routers, bridges, servers, computing devices, storage devices. The network devices within the network (106) may interact with the system (100) through communication links.

The system (100) supports various connectivity options such as BLUETOOTH^{®}, USB, ZigBee, and other cellular services. The network environment enables connection of various components of the system (100) using any communication link including Internet, WAN, MAN, and so on. In an exemplary embodiment, the system (100) is implemented to operate as a stand-alone device. In another embodiment, the system (100) may be implemented to work as a loosely coupled device to a smart computing environment. Further, the system (100) comprises at least one memory (110) with a plurality of instructions, one or more databases (112), and one or more hardware processors (108) which are communicatively coupled with the at least one memory to execute a plurality of modules (114) therein. Further, the system comprises an urban object detector (116), an emission data generator (118), an urban growth predictor (120) and an urban metabolic parameter predictor (122). The components and functionalities of the system (100) are described further in detail.

In one embodiment, the system (100) is configured to receive the CDP dataset comprising of publicly available responses to various surveys such as corporate climate change disclosures, corporate water security disclosures, and disclosures from cities. It is to be noted that the CDP data of previous years is available along with a collection of supplementary datasets. Herein, the cities data contains urban disclosing, questionnaires, and responses. The system (100) is configured to pre-process the received CDP data to get individual responses in a pivot table.

In the preferred embodiment, to process an urban in a single image tile, the system (100) takes medium resolution Landsat-8 image as its spatial resolution, which may suffice for the urban lie inside the tile. Landsat-8 images are taken in a summer season to avoid the haze. Usually, boundary of cities has their random shape but initially the system (100) takes a predefined bounding box which encloses the urban boundary for each municipality which has reported emission.

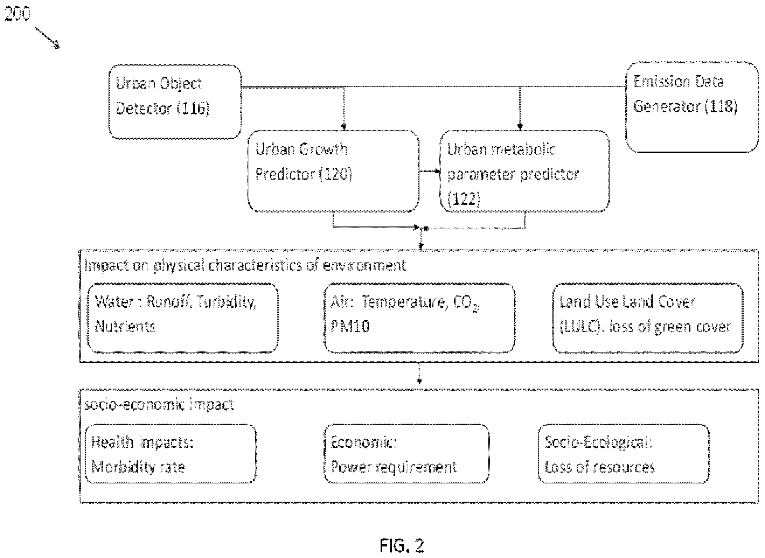

Referring FIG. 2, a block diagram (200) of the system to determine environment and socio-economic impact according to an embodiment of the present disclosure. Herein, the land use land cover models of the urban object detector (116) of the system (100) are the fundamental methods for identifying different land (116) use and land cover regions in the given satellite imagery. The method takes any satellite image as input and identifies the land use and/or land cover in the given region. There are many supervised and unsupervised machine learning techniques available for the same. Any one of them can be used in the urban object detector (116). The importance of the urban object detector (116) in the given context is that it would use the model which provides correct proxy for the given metabolic parameter as per the models in an urban metabolic parameter predictor (122). It would be appreciated that the urban metabolic parameter predictor (122) is a supplementary in cases the metabolic parameter is not available for the entire urban or its spatial distribution is not available with required resolution. This is also useful in cases only a few local measurements, recorded by the measuring instrument, are available.

In another example, wherein the CO₂ concentration measurements are available only for a few total stations (say 20) in the urban. Either using optical satellite data or CO₂ measurements data (which is available at much coarse level a few km by km), we can create models to predict the CO₂ concentration models for the urban at much fine resolution say 30 m by 30 m. These are relations between remotely sensed data parameter and the metabolic parameter. It would require one model for each metabolic parameter and for each parameter different image feature/s are used.

The urban growth models of the urban metabolic parameter predictor (122) are key ingredients of the present system (100). Especially their form they take the impervious surfaces or different land covers and its spatial distribution as an input and predict the spatial distribution of the same over the urban. This cannot be achieved by simple timeseries based models. However, Markov models or cellular automata models are required. For example, VIS distribution over the urban is to be predicted considering detailed transition probabilities for VIS classes at coarse or fine level. Thus, given past land cover or land use data at required granularity, the model learns the transition probabilities of the changes and using such probabilities it predicts the given land cover for future. The land cover historical data is extracted using remotely senses data. Furthermore, other driver parameters of the growth are incorporated as well. This is helpful to play different growth scenarios for different socio-economic conditions.

In another example, wherein to estimate CO₂ emission of a city, firstly the emission data generator (118) is trained with one or more features of the city which may cause CO₂ emission on a particular day. It would be appreciated that herein Landsat data is used which has 30 m spatial resolution and 16 days revisit period. The CDP data available for the city and its emission is used to showcase present system. Secondly, impervious surfaces are extracted from the Landsat data using any supervised classification technique or unsupervised technique. Similarly, hard classification and soft classification can be used too. It is to be noted that the impervious surfaces are one of the proxies for CO₂ emissions. Further, other proxy/proxies such as economic zones, number of buildings, type of buildings, size, and road length at finer resolution can be used. The same proxies may or may not be useful for other parameters, for example, solid waste would not depend upon the road length. The impervious surfaces in general is a good proxy for solid waste.

In the preferred embodiment, the urban metabolic parameter predictor (122) of the system (100) takes image features as an input to predict a required urban metabolic parameter. For example, given impervious surfaces, runoff from the area is predicted. The features such as impervious surface is extracted using satellite imagery. In some conditions the factors that are directly corelated with the metabolic parameter may not be observable. In such condition the proxy feature from the image is extracted and is corelated with the metabolic parameter. For example, fossil fuel burned in the urban is corelated with the impervious surfaces. Many such proxies are used. This is achieved by multiple means. Based on the first principal emission rates can be applied to the extracted image feature from the image, for example, vegetation emits x amount of CO₂ annually. Other method is to develop correlation between the image feature or urban feature based on the historical data. This is useful when the emission factors are not available or not easy to calculate but the quantities from inventory methods are available. For example, emission because of fossil fuel burning including cooking, transportation etc.

In yet another example, wherein goal is to estimate annual carbon dioxide emission from the urban area and predict it for future as well. Firstly, a Landsat data, which has 30 m spatial resolution and 16 days revisit period, is used for estimating carbon dioxide emission. Impervious surfaces are extracted from the Landsat data based on a predefined classification technique. Secondly, a relation between the quantity of impervious surfaces and the carbon dioxide emission is developed based on a regression techniques. In addition to impervious surfaces, other variables can be added for improving the accuracy.

In another embodiment, the urban growth predictor (120) of the system (100) are predicting impervious surface areas are used. Based on the driver parameters and other similar such conditions, different scenarios for spatial distribution of impervious surfaces are generated. Based on that and the model developed for impervious surfaces and CO₂ emissions, the emission for the urban in future are predicted. The urban growth models can provide specific types as well instead of higher-level output such as impervious surface. Though we use impervious surfaces as one of the key indicators for working out quantities of metabolic parameters, as described earlier, any such feature that can be extracted from the image can be used for entire process chain. It is also to be noted that the same proxy may or may not be useful for all metabolic activities. Impervious surfaces are most generic and broad level urban feature that can be easily extracted from the image. Many of the metabolic parameters are related to the impervious surfaces and there is physical basis to it. Similarly, other metabolic parameters can be particulate matter, SO_{X}, NO_{X}, solid waste, wastewater and so on.

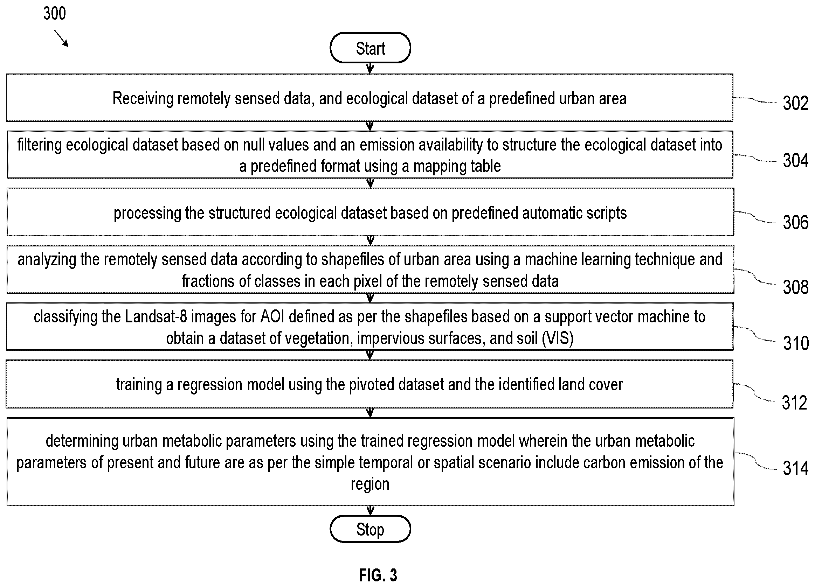

Referring FIG. 3, to illustrate a processor-implemented method (300) estimating urban metabolism based on remotely sensed data.

Initially, at the step (302), receiving, via an input/output interface, a plurality of benign uniform resource locators (URLs) of a business sector from a user, wherein each of the plurality of benign domains include a benign domain.

At the next step (304), filtering, via a one or more hardware processors, the received predefined ecological dataset based on null values and an emission availability to structure the ecological dataset into a predefined format of a mapping table.

At the next step (306), processing, via the one or more hardware processors, the structured ecological dataset based on one or more predefined automatic scripts, wherein the one or more predefined automatic scripts for querying questions and answers of interest from a survey, pivoting the structured ecological dataset, and then further scoping of the ecological dataset as per scope of emission availability and at least one ecological parameter of interest.

At the next step (308), analyzing, via the one or more hardware processors, the received remotely sensed data according to shapefiles of the predefined urban area using a machine learning technique and one or more fractions of classes in each pixel of the remotely sensed data.

At the next step (310), classifying, via the one or more hardware processors, the one or more Landsat-8 images and shapefiles based on a support vector machine to obtain a dataset of vegetation, impervious surfaces, and soil, wherein a fully constrained least square technique is used for linear spectral mixing of the dataset of vegetation, impervious surfaces, and soil (VIS). With 30 m resolution data, many a times, a pixel occupy more than one urban objects (there would be many such pixels in the image). for example, half of the pixel would be occupied by grass and half by concrete. In such cases if hard classification is used, it will estimate the built-up area or vegetation area incorrectly. Calculating correct class areas is important in this exercise. Hence unmixing by variety of means is performed. There are further problems in unmixing which are required to be rectified. For example, soil and built-up confusion. That arises because of the spectral similarity of the two classes/urban objects.

At the next step (312), training, via the one or more hardware processors, a regression model using the pivoted dataset and the identified land cover.

At the last step (314), determining, via the one or more hardware processors, one or more urban metabolic parameters using the trained regression model, wherein the one or more urban metabolic parameters of present and future as per the simple temporal or spatial scenario include carbon emission of the predefined region.

In yet another embodiment, the method (300) comprising adjusting or correcting the soil and built-up fractions in the abundances as a post processing step using a neighborhood or an adjacency rules with one or more fuzzy variables that is high low probability is interpreted using membership function of a fuzzy variable.

The written description describes the subject matter herein to enable any person skilled in the art to make and use the embodiments. The scope of the subject matter embodiments is defined by the claims.

The embodiments of present disclosure herein address unresolved problem of urban metabolism with respect to water demand and carbon dioxide emissions, most of the discussion is based on the reported data by the urban areas. The embodiments herein provide a method and system for estimating urban metabolism based on remotely sensed data. The system is configured to develop a model for identifying correct features from image or proxy features from image and then develop/use relation between the image feature or proxy feature from the image with the urban metabolic parameter. Further, the system develops an urban growth model which predicts spatial extent of the given proxy features. The urban growth scenario for each such conditions is different. By changing conditions of the model, different growth scenarios are played out. For each scenario, at least one urban metabolic parameter is predicted by taking output of the urban growth predictor (120).

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising steps of:
receiving (302), via an input/output interface, remotely sensed data, and a predefined ecological dataset of a predefined urban area, wherein the remotely sensed data includes multispectral data, hyperspectral data, radar data, one or more Landsat-8 images and shapefiles of the predefined urban area;
filtering (304), via one or more hardware processors, the received predefined ecological dataset based on null values and an emission availability to structure the ecological dataset into a predefined format of a mapping table;
processing (306), via the one or more hardware processors, the structured ecological dataset based on one or more predefined automatic scripts to obtain a pivoted dataset;
analyzing (308), via the one or more hardware processors, the received remotely sensed data according to the shapefiles of the predefined urban area using a machine learning technique and one or more fractions of classes in each pixel of the remotely sensed data;
classifying (310), via the one or more hardware processors, the one or more Landsat-8 images based on a support vector machine to obtain a dataset of vegetation, impervious surfaces and soil, VIS;
training (312), via the one or more hardware processors, a regression model using the pivoted dataset and a land cover, wherein the training (312) comprises training of the machine learning technique via the one or more fractions or abundances of the VIS in an input image pixel by feeding a Normalized Difference Vegetation Index, NDVI, a Soil Adjusted Vegetation Index, SAVI, and a built-up indices to a neural network; and
determining (314), via the one or more hardware processors, one or more urban metabolic parameters using the trained regression model, wherein the one or more urban metabolic parameters comprise carbon emission of the predefined urban area , wherein the training (312) of the regression model comprises developing a relation between a quantity of the impervious surfaces and the carbon emission, and wherein the carbon emission for the predefined urban area in future is predicted based on the trained regression model and based on a spatial distribution of the impervious surfaces generated for different scenarios based on driver parameters.

2. The processor-implemented method (300) of claim 1, wherein a fully constrained least square technique is used for linear spectral mixing of the dataset of VIS.

3. The processor-implemented method (300) of claim 1, further comprising adjusting the soil and built-up fractions in the abundances as a post processing step using a neighborhood pixel labels or an adjacency rules with one or more fuzzy variables that is high and low probability is interpreted using a membership function of at least one of one or more fuzzy variables.

4. A system (100) comprising:
an input/output interface (104) to receive remotely sensed data and a predefined ecological dataset of a predefined urban area, wherein the remotely sensed data includes multispectral data, hyperspectral data, radar data, one or more Landsat-8 images and shapefiles of the predefined urban area;
one or more hardware processors (108);
a memory (110) in communication with the one or more hardware processors (108), wherein the one or more hardware processors (108) are configured to execute programmed instructions stored in the memory (110), to:
filter the received predefined ecological dataset based on null values and an emission availability to structure the ecological dataset into a predefined format of a mapping table;
process the structured ecological dataset based on one or more predefined automatic scripts to obtain a pivoted dataset;
analyze the received remotely sensed data according to the shapefiles of the predefined urban area using a machine learning technique and one or more fractions of classes in each pixel of the remotely sensed data;
classify the one or more Landsat-8 images based on a support vector machine to obtain a dataset of vegetation, impervious surfaces, and soil, VIS;
train a regression model using the pivoted dataset and a land cover, wherein to train the regression model, the one or more hardware processors (108) are configured to execute programmed instructions stored in the memory (110), to train the machine learning technique via the one or more fractions or abundances of the VIS in an input image pixel by feeding a Normalized Difference Vegetation Index, NDVI, a Soil Adjusted Vegetation Index, SAVI, and a built-up indices to a neural network; and
determine one or more urban metabolic parameters using the trained regression model, wherein the one or more urban metabolic parameters comprise carbon emission of the predefined urban area, wherein the training of the regression model comprises developing a relation between a quantity of the impervious surfaces and the carbon emission, and wherein the carbon emission for the predefined urban area in future is predicted based on the trained regression model and based on a spatial distribution of the impervious surfaces generated for different scenarios based on driver parameters.

5. A non-transitory computer readable medium storing one or more instructions which when executed by one or more processors on a system, cause the one or more processors to perform method comprising:
receiving, via an input/output interface, remotely sensed data, and a predefined ecological dataset of a predefined urban area, wherein the remotely sensed data includes multispectral data, hyperspectral data, radar data, one or more Landsat-8 images and shapefiles of the predefined urban area;
filtering, via a one or more hardware processors, the received predefined ecological dataset based on null values and an emission availability to structure the ecological dataset into a predefined format of a mapping table;
processing, via the one or more hardware processors, the structured ecological dataset based on one or more predefined automatic scripts to obtain a pivoted dataset;
analyzing, via the one or more hardware processors, the received remotely sensed data according to the shapefiles of the predefined urban area using a machine learning technique and one or more fractions of classes in each pixel of the remotely sensed data;
classifying, via the one or more hardware processors, the one or more Landsat-8 images based on a support vector machine to obtain a dataset of vegetation, impervious surfaces, and soil, VIS;
training, via the one or more hardware processors, a regression model using the pivoted dataset and a land cover, wherein the training comprises training of the machine learning technique via the one or more fractions or abundances of the VIS in an input image pixel by feeding a Normalized Difference Vegetation Index, NDVI, a Soil Adjusted Vegetation Index, SAVI, and a built-up indices to a neural network; and
determining, via the one or more hardware processors, one or more urban metabolic parameters using the trained regression model, wherein the one or more urban metabolic parameters comprise carbon emission of the predefined urban area, wherein the training of the regression model comprises developing a relation between a quantity of the impervious surfaces and the carbon emission, and wherein the carbon emission for the predefined urban area in future is predicted based on the trained regression model and based on a spatial distribution of the impervious surfaces generated for different scenarios based on driver parameters.

## Patentansprüche

1. Prozessorimplementiertes Verfahren (300), das die folgenden Schritte umfasst:
Empfangen (302), über eine Eingabe-/Ausgabe-Schnittstelle, von fernerfassten Daten und eines vordefinierten ökologischen Datensatzes eines vordefinierten Stadtgebiets, wobei die fernerfassten Daten Multispektraldaten, Hyperspektraldaten, Radardaten, ein oder mehrere Landsat-8-Bilder und Shapefiles des vordefinierten Stadtgebiets beinhalten;
Filtern (304), über einen oder mehrere Hardwareprozessoren, des empfangenen vordefinierten ökologischen Datensatzes basierend auf Nullwerten und einer Emissionsverfügbarkeit, um den ökologischen Datensatz in ein vordefiniertes Format einer Abbildungstabelle zu strukturieren;
Verarbeiten (306), über den einen oder die mehreren Hardwareprozessoren, des strukturierten ökologischen Datensatzes basierend auf einem oder mehreren vordefinierten automatischen Skripten, um einen geschwenkten Datensatz zu erhalten;
Analysieren (308), über den einen oder die mehreren Hardwareprozessoren, der empfangenen fernerfassten Daten gemäß den Shapefiles des vordefinierten Stadtgebiets unter Verwendung einer Maschinenlerntechnik und eines oder mehrerer Bruchteile von Klassen in jedem Pixel der fernerfassten Daten;
Klassifizieren (310), über den einen oder die mehreren Hardwareprozessoren, des einen oder der mehreren Landsat-8-Bilder basierend auf einer Stützvektormaschine, um einen Datensatz von Vegetation, undurchlässigen Oberflächen und Boden, VIS, zu erhalten;
Trainieren (312), über den einen oder die mehreren Hardwareprozessoren, eines Regressionsmodells unter Verwendung des geschwenkten Datensatzes und einer Landabdeckung, wobei das Trainieren (312) das Trainieren der Maschinenlerntechnik über den einen oder die mehreren Bruchteile oder Häufigkeiten des VIS in einem Eingabebildpixel durch Einspeisen eines Normalized Difference Vegetation Index, NDVI, eines Soil Adjusted Vegetation Index, SAVI, und eines Built-up-Indexes in ein neuronales Netzwerk umfasst; und
Bestimmen (314), über den einen oder die mehreren Hardwareprozessoren, eines oder mehrerer städtischer Stoffwechselparameter unter Verwendung des trainierten Regressionsmodells, wobei der eine oder die mehreren städtischen Stoffwechselparameter die Kohlenstoffemission des vordefinierten Stadtgebiets umfassen, wobei das Trainieren (312) des Regressionsmodells das Entwickeln einer Beziehung zwischen einer Menge der undurchlässigen Oberflächen und der Kohlenstoffemission umfasst, und wobei die Kohlenstoffemission für das vordefinierte Stadtgebiet in Zukunft basierend auf dem trainierten Regressionsmodell und basierend auf einer räumlichen Verteilung der undurchlässigen Oberflächen, die für verschiedene Szenarien basierend auf Fahrerparametern erzeugt werden, vorhergesagt wird.

2. Prozessorimplementiertes Verfahren (300) nach Anspruch 1, wobei eine vollständig eingeschränkte Methode der kleinsten Quadrate für das lineare spektrale Mischen des Datensatzes von VIS verwendet wird.

3. Prozessorimplementiertes Verfahren (300) nach Anspruch 1, das ferner das Anpassen des Bodens und der Built-up-Fraktionen in den Häufigkeiten als einen Nachverarbeitungsschritt unter Verwendung einer Nachbarschaftspixelmarkierung oder einer Nachbarschaftsregel mit einer oder mehreren Fuzzy-Variablen, die hoch und mit geringer Wahrscheinlichkeit sind, unter Verwendung einer Zugehörigkeitsfunktion mindestens einer der einen oder mehreren Fuzzy-Variablen interpretiert wird, umfasst.

4. System (100), das Folgendes umfasst:
eine Eingabe-/Ausgabe-Schnittstelle (104) zum Empfangen von fernerfassten Daten und eines vordefinierten ökologischen Datensatzes eines vordefinierten Stadtgebiets, wobei die fernerfassten Daten Multispektraldaten, Hyperspektraldaten, Radardaten, ein oder mehrere Landsat-8-Bilder und Shapefiles des vordefinierten Stadtgebiets beinhalten;
einen oder mehrere Hardwareprozessoren (108);
einen Speicher (110) in Kommunikation mit dem einen oder den mehreren Hardwareprozessoren (108), wobei der eine oder die mehreren Hardwareprozessoren (108) konfiguriert sind, um programmierte Anweisungen auszuführen, die in dem Speicher (110) gespeichert sind, um:
den empfangenen vordefinierten ökologischen Datensatz basierend auf Nullwerten und einer Emissionsverfügbarkeit zu filtern, um den ökologischen Datensatz in ein vordefiniertes Format einer Abbildungstabelle zu strukturieren;
den strukturierten ökologischen Datensatz basierend auf einem oder mehreren vordefinierten automatischen Skripten zu verarbeiten, um einen geschwenkten Datensatz zu erhalten;
die empfangenen fernerfassten Daten gemäß den Shapefiles des vordefinierten Stadtgebiets unter Verwendung einer Maschinenlerntechnik und eines oder mehrerer Bruchteile von Klassen in jedem Pixel der fernerfassten Daten zu analysieren;
das eine oder die mehreren Landsat-8-Bilder basierend auf einer Stützvektormaschine zu klassifizieren, um einen Datensatz von Vegetation, undurchlässigen Oberflächen und Boden, VIS, zu erhalten;
ein Regressionsmodell unter Verwendung des geschwenkten Datensatzes und einer Landabdeckung zu trainieren, wobei zum Trainieren des Regressionsmodells der eine oder die mehreren Hardwareprozessoren (108) konfiguriert sind, um programmierte Anweisungen auszuführen, die in dem Speicher (110) gespeichert sind, um die Maschinenlerntechnik über den einen oder die mehreren Bruchteile oder Häufigkeiten des VIS in einem Eingabebildpixel durch Einspeisen eines Normalized Difference Vegetation Index, NDVI, eines Soil Adjusted Vegetation Index, SAVI, und eines Built-up-Indexes in ein neuronales Netzwerk zu trainieren; und
einen oder mehrere städtische Stoffwechselparameter unter Verwendung des trainierten Regressionsmodells zu bestimmen, wobei der eine oder die mehreren städtischen Stoffwechselparameter die Kohlenstoffemission des vordefinierten Stadtgebiets umfassen, wobei das Trainieren des Regressionsmodells das Entwickeln einer Beziehung zwischen einer Menge der undurchlässigen Oberflächen und der Kohlenstoffemission umfasst, und wobei die Kohlenstoffemission für das vordefinierte Stadtgebiet in Zukunft basierend auf dem trainierten Regressionsmodell und basierend auf einer räumlichen Verteilung der undurchlässigen Oberflächen, die für verschiedene Szenarien basierend auf Fahrerparametern erzeugt werden, vorhergesagt wird.

5. Nichtflüchtiges computerlesbares Medium, das eine oder mehrere Anweisungen speichert, die, wenn sie von einem oder mehreren Prozessoren auf einem System ausgeführt werden, den einen oder die mehreren Prozessoren veranlassen, ein Verfahren durchzuführen, das Folgendes umfasst:
Empfangen, über eine Eingabe-/Ausgabe-Schnittstelle, von fernerfassten Daten und eines vordefinierten ökologischen Datensatzes eines vordefinierten Stadtgebiets, wobei die fernerfassten Daten Multispektraldaten, Hyperspektraldaten, Radardaten, ein oder mehrere Landsat-8-Bilder und Shapefiles des vordefinierten Stadtgebiets beinhalten;
Filtern, über einen oder mehrere Hardwareprozessoren, des empfangenen vordefinierten ökologischen Datensatzes basierend auf Nullwerten und einer Emissionsverfügbarkeit, um den ökologischen Datensatz in ein vordefiniertes Format einer Abbildungstabelle zu strukturieren;
Verarbeiten, über den einen oder die mehreren Hardwareprozessoren, des strukturierten ökologischen Datensatzes basierend auf einem oder mehreren vordefinierten automatischen Skripten, um einen geschwenkten Datensatz zu erhalten;
Analysieren, über den einen oder die mehreren Hardwareprozessoren, der empfangenen fernerfassten Daten gemäß den Shapefiles des vordefinierten Stadtgebiets unter Verwendung einer Maschinenlerntechnik und eines oder mehrerer Bruchteile von Klassen in jedem Pixel der fernerfassten Daten;
Klassifizieren, über den einen oder die mehreren Hardwareprozessoren, des einen oder der mehreren Landsat-8-Bilder basierend auf einer Stützvektormaschine, um einen Datensatz von Vegetation, undurchlässigen Oberflächen und Boden, VIS, zu erhalten;
Trainieren, über den einen oder die mehreren Hardwareprozessoren, eines Regressionsmodells unter Verwendung des geschwenkten Datensatzes und einer Landabdeckung, wobei das Trainieren das Trainieren der Maschinenlerntechnik über den einen oder die mehreren Bruchteile oder Häufigkeiten des VIS in einem Eingabebildpixel durch Einspeisen eines Normalized Difference Vegetation Index, NDVI, eines Soil Adjusted Vegetation Index, SAVI, und eines Built-up-Indexes in ein neuronales Netzwerk umfasst; und
Bestimmen, über den einen oder die mehreren Hardwareprozessoren, eines oder mehrerer städtischer Stoffwechselparameter unter Verwendung des trainierten Regressionsmodells, wobei der eine oder die mehreren städtischen Stoffwechselparameter die Kohlenstoffemission des vordefinierten Stadtgebiets umfassen, wobei das Trainieren des Regressionsmodells das Entwickeln einer Beziehung zwischen einer Menge der undurchlässigen Oberflächen und der Kohlenstoffemission umfasst, und wobei die Kohlenstoffemission für das vordefinierte Stadtgebiet in Zukunft basierend auf dem trainierten Regressionsmodell und basierend auf einer räumlichen Verteilung der undurchlässigen Oberflächen, die für verschiedene Szenarien basierend auf Fahrerparametern erzeugt werden, vorhergesagt wird.

## Revendications

1. Procédé mis en œuvre par processeur (300) comprenant les étapes consistant à :
recevoir (302), via une interface d'entrée/sortie, des données de télédétection, et un ensemble de données écologiques prédéfini d'une zone urbaine prédéfinie, dans lequel les données de télédétection comprennent des données multispectrales, des données hyperspectrales, des données radar, une ou plusieurs images Landsat-8 et des fichiers de formes de la zone urbaine prédéfinie ;
filtrer (304), via un ou plusieurs processeurs matériels, l'ensemble de données écologiques prédéfini reçu sur la base de valeurs nulles et d'une disponibilité d'émission pour structurer l'ensemble de données écologiques dans un format prédéfini d'une table de correspondance ;
traiter (306), via les un ou plusieurs processeurs matériels, l'ensemble de données écologiques structuré sur la base d'un ou plusieurs scripts automatiques prédéfinis pour obtenir un ensemble de données pivotées ;
analyser (308), via les un ou plusieurs processeurs matériels, les données de télédétection reçues selon les fichiers de formes de la zone urbaine prédéfinie en utilisant une technique d'apprentissage automatique et une ou plusieurs fractions de classes dans chaque pixel des données de télédétection ;
classer (310), via les un ou plusieurs processeurs matériels, les une ou plusieurs images Landsat-8 sur la base d'une machine à vecteurs de support pour obtenir un ensemble de données de végétation, de surfaces imperméables et de sol, VIS ;
entraîner (312), via les un ou plusieurs processeurs matériels, un modèle de régression en utilisant l'ensemble de données pivotées et une couverture terrestre, dans lequel l'entraînement (312) comprend l'entraînement de la technique d'apprentissage automatique via les une ou plusieurs fractions ou abondances du VIS dans un pixel d'image d'entrée en fournissant un indice de végétation à différence normalisée, NDVI, un indice de végétation ajusté au sol, SAVI, et des indices de bâti à un réseau neuronal ; et
déterminer (314), via les un ou plusieurs processeurs matériels, un ou plusieurs paramètres du métabolisme urbain en utilisant le modèle de régression entraîné, dans lequel les un ou plusieurs paramètres du métabolisme urbain comprennent une émission de carbone de la zone urbaine prédéfinie, dans lequel l'entraînement (312) du modèle de régression comprend le développement d'une relation entre une quantité des surfaces imperméables et l'émission de carbone, et dans lequel l'émission de carbone pour la zone urbaine prédéfinie à l'avenir est prédite sur la base du modèle de régression entraîné et sur la base d'une distribution spatiale des surfaces imperméables générées pour différents scénarios sur la base de paramètres moteurs.

2. Procédé mis en œuvre par processeur (300) selon la revendication 1, dans lequel une technique des moindres carrés entièrement contraints est utilisée pour un démélange spectral linéaire de l'ensemble de données de VIS.

3. Procédé mis en œuvre par processeur (300) selon la revendication 1, comprenant en outre l'ajustement du sol et des fractions de bâti dans les abondances en tant qu'étape de post-traitement en utilisant des étiquettes de pixel de voisinage ou des règles d'adjacence avec une ou plusieurs variables floues qui est haute et basse probabilité est interprétée en utilisant une fonction d'appartenance d'au moins l'une d'une ou plusieurs variables floues.

4. Système (100) comprenant :
une interface d'entrée/sortie (104) pour recevoir des données de télédétection et un ensemble de données écologiques prédéfini d'une zone urbaine prédéfinie, dans lequel les données de télédétection comprennent des données multispectrales, des données hyperspectrales, des données radar, une ou plusieurs images Landsat-8 et des fichiers de formes de la zone urbaine prédéfinie ;
un ou plusieurs processeurs matériels (108) ;
une mémoire (110) en communication avec les un ou plusieurs processeurs matériels (108), dans lequel les un ou plusieurs processeurs matériels (108) sont configurés pour exécuter des instructions programmées stockées dans la mémoire (110), pour :
filtrer l'ensemble de données écologiques prédéfini reçu sur la base de valeurs nulles et d'une disponibilité d'émission pour structurer l'ensemble de données écologiques dans un format prédéfini d'une table de correspondance ;
traiter l'ensemble de données écologiques structuré sur la base d'un ou plusieurs scripts automatiques prédéfinis pour obtenir un ensemble de données pivotées ;
analyser les données de télédétection reçues selon les fichiers de formes de la zone urbaine prédéfinie en utilisant une technique d'apprentissage automatique et une ou plusieurs fractions de classes dans chaque pixel des données de télédétection ;
classer les une ou plusieurs images Landsat-8 sur la base d'une machine à vecteurs de support pour obtenir un ensemble de données de végétation, de surfaces imperméables et de sol, VIS ;
entraîner un modèle de régression en utilisant l'ensemble de données pivotées et une couverture terrestre, dans lequel pour entraîner le modèle de régression, les un ou plusieurs processeurs matériels (108) sont configurés pour exécuter des instructions programmées stockées dans la mémoire (110), pour entraîner la technique d'apprentissage automatique via les une ou plusieurs fractions ou abondances du VIS dans un pixel d'image d'entrée en fournissant un indice de végétation à différence normalisée, NDVI, un indice de végétation ajusté au sol, SAVI, et des indices de bâti à un réseau neuronal ; et
déterminer un ou plusieurs paramètres du métabolisme urbain en utilisant le modèle de régression entraîné, dans lequel les un ou plusieurs paramètres du métabolisme urbain comprennent une émission de carbone de la zone urbaine prédéfinie, dans lequel l'entraînement du modèle de régression comprend le développement d'une relation entre une quantité des surfaces imperméables et l'émission de carbone, et dans lequel l'émission de carbone pour la zone urbaine prédéfinie à l'avenir est prédite sur la base du modèle de régression entraîné et sur la base d'une distribution spatiale des surfaces imperméables générées pour différents scénarios sur la base de paramètres moteurs.

5. Support lisible par ordinateur non transitoire stockant une ou plusieurs instructions qui, lorsqu'elles sont exécutées par un ou plusieurs processeurs sur un système, amènent les un ou plusieurs processeurs à effectuer un procédé comprenant :
recevoir, via une interface d'entrée/sortie, des données de télédétection, et un ensemble de données écologiques prédéfini d'une zone urbaine prédéfinie, dans lequel les données de télédétection comprennent des données multispectrales, des données hyperspectrales, des données radar, une ou plusieurs images Landsat-8 et des fichiers de formes de la zone urbaine prédéfinie ;
filtrer, via un ou plusieurs processeurs matériels, l'ensemble de données écologiques prédéfini reçu sur la base de valeurs nulles et d'une disponibilité d'émission pour structurer l'ensemble de données écologiques dans un format prédéfini d'une table de correspondance ;
traiter, via les un ou plusieurs processeurs matériels, l'ensemble de données écologiques structuré sur la base d'un ou plusieurs scripts automatiques prédéfinis pour obtenir un ensemble de données pivotées ;
analyser, via les un ou plusieurs processeurs matériels, les données de télédétection reçues selon les fichiers de formes de la zone urbaine prédéfinie en utilisant une technique d'apprentissage automatique et une ou plusieurs fractions de classes dans chaque pixel des données de télédétection ;
classer, via les un ou plusieurs processeurs matériels, les une ou plusieurs images Landsat-8 sur la base d'une machine à vecteurs de support pour obtenir un ensemble de données de végétation, de surfaces imperméables et de sol, VIS ;
entraîner, via les un ou plusieurs processeurs matériels, un modèle de régression en utilisant l'ensemble de données pivotées et une couverture terrestre, dans lequel l'entraînement comprend l'entraînement de la technique d'apprentissage automatique via les une ou plusieurs fractions ou abondances du VIS dans un pixel d'image d'entrée en fournissant un indice de végétation à différence normalisée, NDVI, un indice de végétation ajusté au sol, SAVI, et des indices de bâti à un réseau neuronal ; et
déterminer, via les un ou plusieurs processeurs matériels, un ou plusieurs paramètres du métabolisme urbain en utilisant le modèle de régression entraîné, dans lequel les un ou plusieurs paramètres du métabolisme urbain comprennent une émission de carbone de la zone urbaine prédéfinie, dans lequel l'entraînement du modèle de régression comprend le développement d'une relation entre une quantité des surfaces imperméables et l'émission de carbone, et dans lequel l'émission de carbone pour la zone urbaine prédéfinie à l'avenir est prédite sur la base du modèle de régression entraîné et sur la base d'une distribution spatiale des surfaces imperméables générées pour différents scénarios sur la base de paramètres moteurs.
